# EUROPEAN PATENT APPLICATION

(11) **EP 4 485 435 A2**
(43) Date of publication of application: **01.01.2025**
(21) Application number: 24181359.1
(22) Date of filing: 11.06.2024
(51) Int. Cl.: G09F 13/04, G09F 23/00, G09F 13/22

(54) **DISPLAY APPARATUS AND ELECTRONIC INSTRUMENT**

(30) Priority: 26.06.2023 JP 2023103885
(71) Applicant: CASIO COMPUTER CO., LTD., Shibuya-ku, Tokyo 151-8543 (JP)
(72) Inventor: Nakajima, Yuuki, Hamura-shi, Tokyo, 205-8555 (JP); Fukushima, Shingo, Hamura-shi, Tokyo, 205-8555 (JP); Sakai, Otoya, Hamura-shi, Tokyo, 205-8555 (JP)
(74) Representative: Grünecker Patent- und Rechtsanwälte PartG mbB

(57) **Abstract**

A display apparatus (40) includes a plurality of light sources (72) which are aligned side by side in a first direction, and a light guiding unit (60) configured to have an incident surface (64b1) on which light from the at least one of the plurality of light sources (72) is incident and an emitting surface (64a1) from which light from the incident surface (64b1) is emitted and include openings (62a1) provided in positions along a second direction with respect to positions of the plurality of light sources (72) respectively, the second direction intersects the first direction.

## Description

### CROSS-REFERENCE TO RELATED APPLICATION

This application is based upon and claims the benefit of priority under 35 USC 119 of Japanese Patent Application No. 2023-103885 filed on June 26, 2023, the entire disclosure of which, including the specification, claims, drawings and abstract, is incorporated herein by reference in its entirety.

### BACKGROUND

### TECHNICAL FIELD

The present disclosure relates to a display apparatus and an electronic instrument.

### Description of the Related Art

There have conventionally been known display apparatuses including a light guiding unit for guiding light from a light source which is incident on an incident surface to make the light emitted from an emitting surface which lies opposite to the incident surface. For example, Japanese Unexamined Patent Application Publication No. 2007-127909 (JP-A-2007-127909) discloses an LED display as a display apparatus which includes multiple LEDs (Light Emitting Devices) as multiple light sources, and a light guiding unit for guiding lights from the multiple LEDs. In this LED display, a light receiving surface (an incident surface) is provided on an end face of the light guiding unit which faces the LEDs, and a display surface (an emitting surface) is provided on an end face of the light guiding unit which lies opposite to the light receiving surface in such a manner as to be parallel to the light receiving surface.

### [Technical Problem]

With the display apparatus disclosed in JP-A-2007-127909, there may be occurring a case in which a desired display can hardly be attained as a result of diffusion of light from a light source.

The present disclosure advantageously provides a display apparatus for performing a good display and an electronic instrument including the display apparatus.

### [Effect of the Disclosure]

According to the present disclosure, the display apparatus for performing a good display and the electronic instrument including the display apparatus can be provided.

### SUMMARY

According to an aspect of the present disclosure, there is provided a display apparatus including a plurality of light sources which are aligned side by side in a first direction, and a light guiding unit configured to have an incident surface on which light from the at least one of the plurality of light sources is incident and an emitting surface from which light from the incident surface is emitted and include openings provided in positions along a second direction with respect to positions of the plurality of light sources respectively, the second direction intersects the first direction.

According to another aspect of the present disclosure, there is provided a display apparatus including at least one light source, a light guiding plate configured to have an incident surface on which light from the at least one light source is incident and an emitting surface from which the light from the incident surface is emitted, and a support formed from the same material as a material of the light guiding plate and having a support section configured to support the light guiding plate, wherein the support includes an opening provided in a position contiguous with the support section.

According to a further aspect of the present disclosure, there is provided an electronic instrument that includes the display apparatus described above, configured to display information effectively.

### BRIEF DESCRIPTION OF THE DRAWINGS

FIG. 1 is an overall perspective view of an electronic keyboard instrument according to an embodiment of the present disclosure as viewed from a front side;
FIG. 2 is a perspective view of a main body part of the electronic keyboard instrument according to the embodiment as viewed from a back side, showing a state in which a left arm plate is removed;
FIG. 3 is an exploded perspective view of a display unit, an insulating sheet, and a metallic sheet according to the embodiment;
FIG. 4 is a perspective view of a light guiding unit of the display unit according to the embodiment as viewed from the front side;
FIG. 5 is a back view of the light guiding unit of the display unit according to the embodiment;
FIG. 6 is a front view of the light guiding unit and an LED substrate of the display unit, the insulating sheet, and the metallic sheet according to the embodiment;
FIG. 7 is a vertical sectional view of the light guiding unit and the LED substrate of the display unit, the insulating sheet, and the metallic sheet according to the embodiment, which is a sectional view of a section taken along a line VII-VII in FIG. 6; and
FIG. 8 is a horizontal sectional view showing the light guiding unit and the LED substrate of the display unit, the insulating sheet, and the metallic sheet according to the embodiment, which is a sectional view of a section taken along a line VIII-VIII in FIG. 6.

### DESCRIPTION OF THE EMBODIMENT

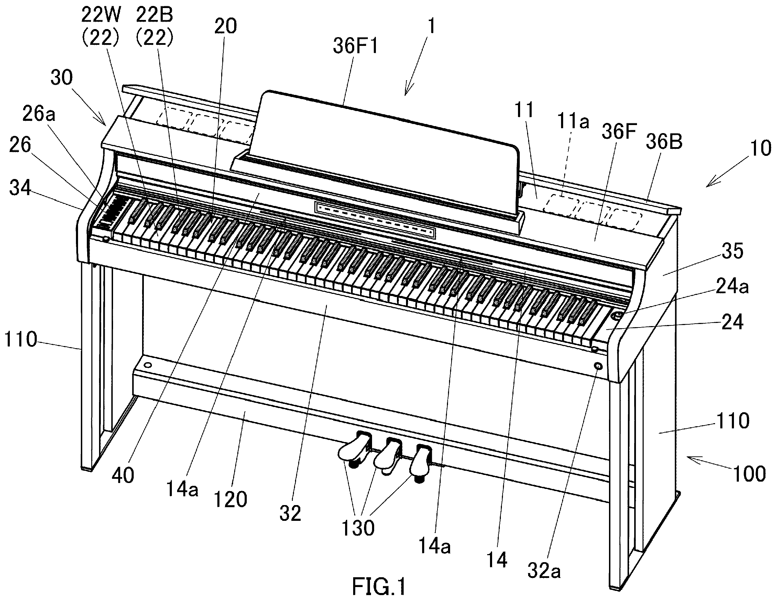

Referring to drawings, an embodiment of the present disclosure will be described. An electronic keyboard instrument (an electronic instrument) 1 shown in FIG. 1 includes a main body part 10 and a leg part 100. As shown in FIG. 1, the main body part 10 includes a keyboard 20 and a main body case (a casing) 30 which encompasses the keyboard 20 to hold it. The keyboard 20 has a plurality of keys (operators) 22 made up of white keys 22W and black keys 22B, whose key press sections are disposed in such a manner as to be exposed. The leg part 100 includes a pair of side plates 110, a pedal frame 120, and a pedal device 130. In the following description, an alignment direction of the plurality of keys 22 of the keyboard 20 is referred to as a left-right direction (in FIG. 1, a direction towards a left side is referred to as a leftward direction), an extending direction of each key 22 is referred to as a front-back direction (in FIG. 1, a direction towards a nearer side is referred to as a frontal direction), and an upper-lower direction of the electronic keyboard instrument 1 is referred to as an upper-lower direction (in FIG. 1, a direction towards an upper side is referred to as an upper direction).

As shown in FIG. 1, the pair of side plates 110 are component plates which are erected on a setting surface on both left and right sides of the electronic keyboard instrument 1 in such a posture that both plate surfaces of each of the component plates are oriented in the left-right direction so as to support the main body case 30. The pedal frame 120 extends between the side plates 110 to connect them together at respective lower sides of the side plates 110. The pedal device 130 is provided substantially at a central portion of the pedal frame 120 in the left-right direction. In the electronic keyboard instrument 1, the main body case 30 of the main body part 10 and both the side plates 110 of the leg part 100, which are exposed to an exterior of the electronic keyboard instrument 1, are made of wood, and this features the quality of the electronic keyboard instrument 1.

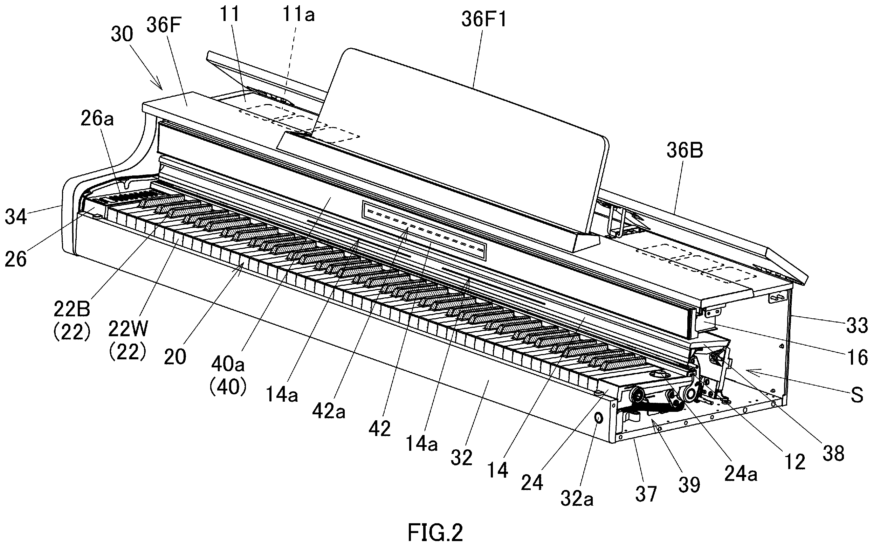

As shown in FIGS. 1 and 2, when viewed from an upper side and a lower side thereof, the main body case 30 has a laterally elongated, substantially rectangular shape in which a longitudinal direction thereof follows the left-right direction and has thick component plates such as a front plate 32, a back plate 33, a left side arm plate 34, a right side arm plate 35, a front top plate 36F, a back top plate 36B, and a lower plate 37. In addition, the main case body 30 has a vertical section of substantially an L-shape when viewed from the leftward direction. Here, in FIG. 2, the main body case 30 is shown being in a state in which the left side arm plate 34 is removed. The front plate 32 has a substantially rectangular shape which is elongated in the left-right direction. Then, the front plate 32 constitutes a lower portion of a front end portion of the main body part 10 and constitutes a front surface of the main body case 30 below the keyboard 20. A power supply button 32a for switching on and off the electronic keyboard instrument 1 is provided at a right end portion of the front plate 32. The back plate 33 has a substantially rectangular shape which is elongated in the left-right direction and is provided behind the main body part 10, constituting a back surface of the main body case 30.

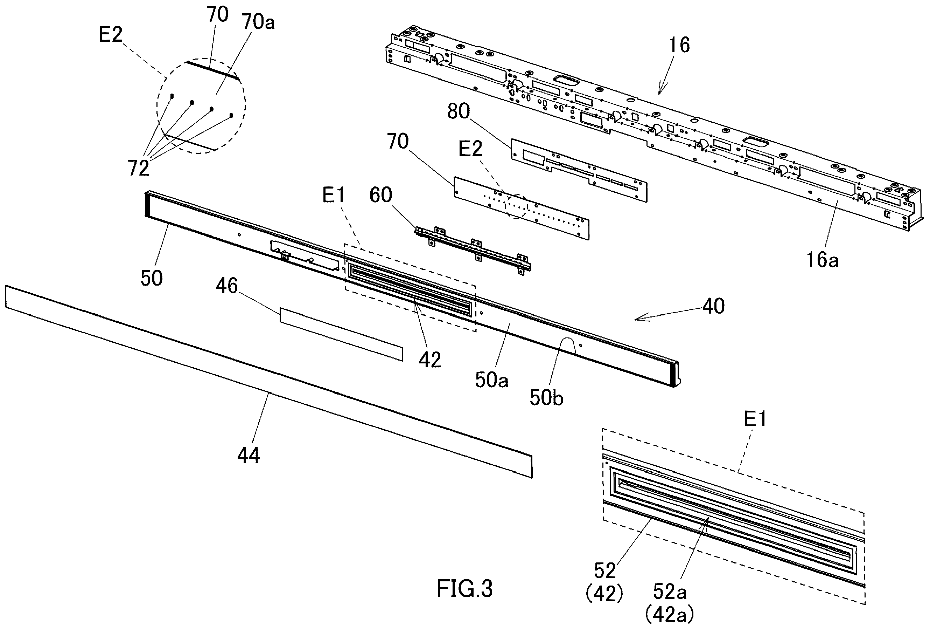

The left side arm plate 34 and the right side arm plate 35 each have a substantially rectangular shape which is elongated in the front-back direction. In each of the left side arm plate 34 and the right side arm plate 35, a step is provided at a substantially central portion in the front-back direction so that the height of a front half portion becomes substantially equal to the height of the keyboard 20. The left side arm plate 34 and the right side arm plate 35 are provided individually at a left side and a right side of the main body part 10, constituting a left side surface and a right side surface of the main body case 30, respectively. The front top plate 36F has a substantially rectangular shape which is elongated in the left-right direction and is provided on a front-side portion of an upper backward section of the main body part 10, constituting a part of an upper surface of the main body case 30. The back top plate 36B has a substantially rectangular shape which is elongated in the left-right direction and is provided on a back-side portion of the upper backward section of the main body part 10, constituting another part of the upper surface of the main body case 30. Here, as shown in FIGS. 1 and 3, a volume panel 24 on which a volume knob 24a for controlling the volume of an output sound from a loudspeaker and the like are disposed is provided between the keyboard 20 and the right side arm plate 35. In addition, a setting panel 26 on which various types of setting buttons 26a and the like are disposed is provided between the keyboard 20 and the left side arm plate 34.

The back top plate 36B is attached rotatably to the back plate 33 in such a manner that the back plate 33 is opened from a front side thereof. A cover plate 11, having a substantially rectangular plate-like shape which is elongated in the left-right direction, is provided on a lower side of the back top plate 36B in such a posture that both plate surfaces thereof are oriented in the upper-lower direction. A plurality of upper openings 11a, each having a substantially rectangular shape and opened upwards, are provided in the cover plate 11 in such a manner as to be disposed at predetermined intervals in the left-right direction. An upper surface and side surfaces of the cover plate 11 are covered with a saran net. With the back top plate 36B left open, an opening on a lower side of the back top plate 36B is covered by the cover plate 11, so that an interior of the main body case 30 is made invisible. In addition, a music stand 36F1 is attached to a substantially central portion of the front top plate 36F in the left-right direction thereof. The lower plate 37 has a substantially rectangular shape which is elongated in the left-right direction and is provided on a lower side of the main body part 10, constituting a lower surface of the main body case 30.

As shown in FIG. 2, a console unit 12, having a substantially rectangular plate-like shape which is elongated in the left-right direction, is provided at back sides of the keys 22 of the keyboard 20 in such a posture that both plate surfaces thereof are oriented in the upper-lower direction. The console unit 12 is provided in a position where the console unit 12 is superposed on a front end portion of the front top plate 36F in the upper-lower direction in such a manner as to cover back end portions of the keys 22 of the keyboard 20. Various types of switches are provided on a frontal surface of the console unit 12. Then, the console unit 12 prevents the interior of the main body case 30 from becoming visible via a gap at a back end portion of the keyboard 20 from an exterior of the electronic keyboard instrument 1. A key press mechanism 39 is provided in a space defined between the keyboard 20 and the lower plate 37 to realize a key press feeling and tones which are close to those provided by a real piano when the player presses the keys 22 of the keyboard 20.

As shown in FIG. 2, the main body part 10 includes a key cover 38 for covering the section of the keyboard 20 which is exposed to the outside. The key cover 38 can be folded into two sections via a hinge and can freely be pushed into and pulled out of a space defined on a back side of the key press mechanism 39 in the interior of the main body case 30. A hand-held unit 14, constituting a hand-held section of the key cover 38, is provided between a front end portion of the key cover 38 and the console unit 12. Two sound releasing holes 14a, each having a laterally elongated, substantially rectangular shape, are provided individually in portions closer to a center of the hand-held unit 14 in such a manner as to be opened to penetrate the hand-held unit 14. Additionally, a loudspeaker, not shown, is provided in a space S defined on a back side of the key cover 38 in such a state that the key cover 38 is accommodated within the main body case 30 (a state shown in FIG. 2). The loudspeaker is configured to emit a sound which is realized by the key press mechanism 39.

A metallic sheet 16 is attached to a lower surface of the front top plate 36F in such a manner as to extend in the left-right direction (refer to FIGS. 2 and 3). The metallic sheet 16 is formed substantially into a stepped structure from a front lower side to a back upper side. A display unit (a display apparatus) 40, having a substantially rectangular thick plate-like shape which is elongated in the left-right direction, is attached to a front end portion of a lower step of the metallic sheet 16 of the substantially stepped structure in such a posture that a display surface is oriented in the frontal direction. The display unit 40 is provided between the key cover 38 and the front top plate 36F while defining a gap opened towards the front side on upper and lower sides thereof. In the electronic keyboard instrument 1, sound emitted from the loudspeaker provided within the main body case 30 is designed to be released to the exterior of the main body case 30 by way of at least one of four sound releasing paths of a sound releasing path passing through interspaces between the keys 22 of the keyboard 20, a sound releasing path passing through the sound releasing holes 14a, a sound releasing path passing through the gaps opened on the upper and lower sides of the display unit 40, and a sound releasing path passing through the upper openings 11a.

Next, the operation/working-effect and configuration of the display unit 40, which constitutes a main part of the present disclosure, will be described in detail. As shown in FIG. 2, a display section 42 is provided at a substantially central portion of a front surface 40a of the display unit 40 in the left-right direction. This display section 42 has a substantially rectangular shape which is elongate in the left-right direction and is configured to display information related to playing of the electronic keyboard instrument 1. When referred to here, displaying information related to playing means displaying, for example, a metronome function or a magnitude of a key press value of the key 22 when the key 22 is pressed by the player. A display area 42a is provided at a central portion of the display section 42, and this display area 42a is illuminated by lights from a plurality of LEDs 72 (refer to FIG. 3), which will be described later. The plurality of LEDs 72 are aligned along the left-right direction, and arbitrary LEDs 72 in the plurality of LEDs 72 are turned on and off.

When the display section 42 displays a metronome function, firstly, in the plurality of LEDs 72, some successive LEDs 72 are turned on to be illuminated as a mass of illuminated LEDs, while the other LEDs 72 are left turned off to be unilluminated. Here, according to a set tempo, in the illuminated LEDs 72, the LED 72 positioned at one end in the left-right direction (for example, at a left end) is turned off, and in the unilluminated LEDs 72, the LED 72 positioned adjacent to the illuminated LED 72 at the other end in the left-right direction (for example, a right end) is turned on, so that the same number of successive LEDs 72 are always illuminated all together. Hereafter, this series of turning-on and turning-off operations is repeated, and when there is left no more unilluminated LEDs 72 at the other end side of the mass of illuminated LEDs, the illuminated LED 72 at the other end is turned off, and the unilluminated LED 72 positioned adjacent to the illuminated LED 72 of the mass of illuminated LEDs which is positioned at the one end is turned on, and thereafter, this series of turning-on and turning-off operations is repeated. That is, some successive illuminated LEDs 72 are seen as if performing a reciprocating motion repeatedly in the left-right direction in the display area 42a to the set tempo, whereby the metronome function is realized.

As shown in FIG. 3, the display unit 40 includes, sequentially from the front side, an acryl panel 44, a diffusing sheet 46, a light shielding case (a light shielding unit) 50, a light guiding unit 60, and an LED substrate (a substrate) 70. The insulating sheet 80 is disposed behind the LED substrate 70. The metallic sheet 16 described above is disposed behind the insulating sheet 80. The acryl panel 44 is a transparent component panel of a substantially rectangular plate-like shape which is elongated in the left-right direction and is disposed in such a posture that the display surface is oriented in the frontal direction, constituting a front surface 40a of the display unit 40. The diffusing sheet 46 is a laterally elongated component sheet of a substantially rectangular shape which is shaped and sized so as to match the display section 42. The diffusing sheet 46 is formed from PET (polyethylene terephthalate) and has a light diffusing characteristic. The diffusing sheet 46 is affixed to a portion of a front surface 50a of the light shielding case 50 which corresponds to the display section 42.

The light shielding case 50 is a component of a substantially rectangular plate-like shape which is elongated in the left-right direction. The light shielding case 50 is formed from, for example, black polystyrene and has a light shielding characteristic. The light shielding case 50 is disposed in such a posture that both case surfaces including the front surface 50a are oriented in the front-back direction. In the front surface 50a of the light shielding case 50, an outer edge portion 50b lying along an outer edge of the front surface 50a slightly protrudes towards the front side, whereby a substantially recessed concave section in the front surface 50a is surrounded by the outer edge portion 50b in such a manner as to be opened towards the front side. The acryl panel 44 is fitted in this concave section 50b. As shown in an enlarged view E1 in FIG. 3, a frame-shaped section 52 is provided on the front surface 50a of the light shielding case 50 in a position corresponding to the display section 42, and this frame-shaped section 52 has a laterally elongated, substantially rectangular shape which matches the shape of the display section 42. In addition, a laterally elongated, substantially rectangular emission opening 52a is provided in an internal side of the frame-shaped section 52 in a position corresponding to the display area 42a, and a part of the light guiding unit 60 is inserted in the emission opening 52a, whereby lights from the LEDs 72 are emitted from the emission opening 52a.

The LED substrate 70 is a laterally elongated, substantially rectangular component plate having a shape corresponding to that of the display section 42 and is sized on size larger than the display section 42. Two main surfaces of the LED substrate 70 including a front surface 70a are oriented in the front-back direction. As shown in an enlarged view E2 in FIG. 3, the plurality of LEDs (light sources) 72 are provided on the front surface 70a of the LED substrate 70 in a central position in the upper-lower direction. The plurality of LEDs 72 are disposed side by side at equal intervals along the left-right direction (a first direction), and substantially rectangular light emitting surfaces (emission surfaces) thereof are oriented towards the front side. In the present embodiment, 20 (twenty) LEDs 72 are provided on the LED substrate 70. The insulating sheet 80 is a laterally elongated, substantially rectangular component sheet having a shape corresponding to that of the LED substrate 70 and sized one size larger than the LED substrate 70. This component sheet has an insulating characteristic. The insulating sheet 80 is held between the LED substrate 70 and the metallic sheet 16 to thereby prevent the occurrence of a short-circuit between the LED substrate 70 and the metallic sheet 16.

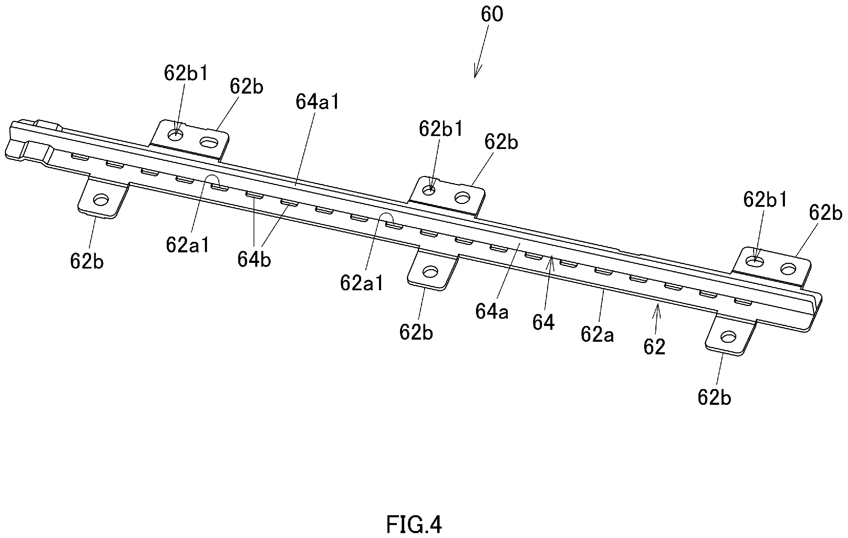

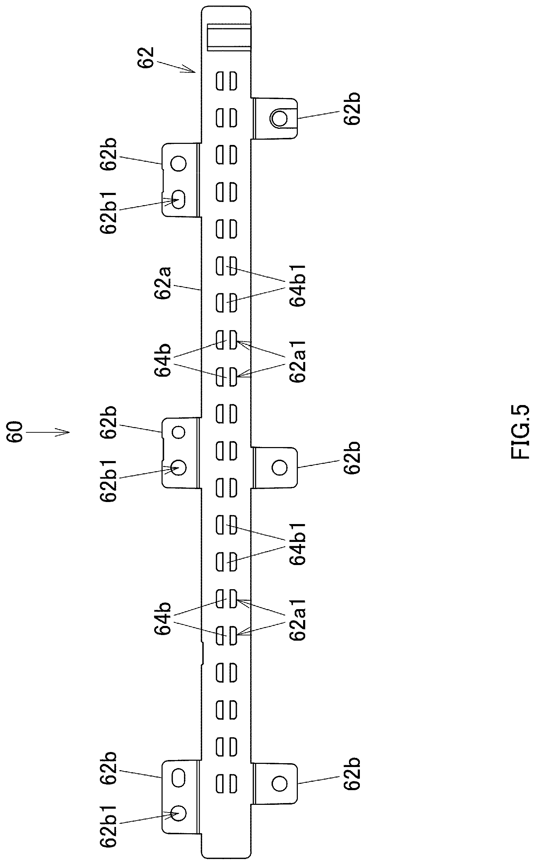

Next, the configuration of the light guiding unit 60 will be described in detail. As shown in FIGS. 4 and 5, the light guiding unit 60 is formed from polycarbonate or acryl having a superior light transmitting characteristic and has a first component plate (a support) 62 and a second component plate (a light guiding plate) 64. The first component plate 62 is a laterally elongated, substantially rectangular component plate and is disposed in such a posture that both plate surfaces are oriented in the front-back direction. Then, a dimension of the first component plate 62 in the left-right direction is substantially equal to a dimension of the emission opening 52a in the left-right direction. The first component plate 62 is superposed on the front surface 70a of the LED substrate 70 in such a manner that the plate surfaces thereof are substantially parallel to the substrate surfaces of the LED substrate 70.

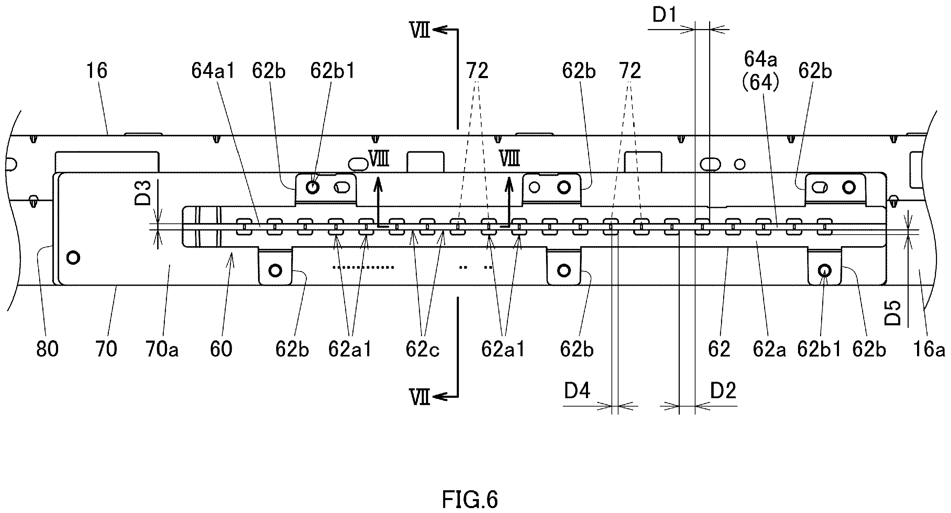

The first component plate 62 includes a plate section 62a which constitutes the plate surfaces of the first component plate 62, a plurality of protruding sections 62b which are slightly lowered in a step-like fashion from external edge portions of longitudinal sides of the plate section 62a towards the back side and are caused to protrude outwards (in an upward direction or a downward direction) into substantially rectangular shapes, and support sections 62c (refer to FIG. 6) which are coupled integrally to the second component plate 64 to thereby prevent the deformation or separation of the second component plate 64. The first component plate 62 functions as a support for supporting the second component plate 64. The first component plate 62 and the second component plate 64 are both formed integrally from the same material, and hence, the first component plate 62 and the second component plate 64 can be fabricated together more easily than molding separate components together by causing them to correspond exactly in position.

A plurality of openings (hereinafter, referred to as "LED openings 62a1"), which are each opened into a substantially rectangular shape, are provided in the plate section 62a of the first component plate 62 in such a manner as to penetrate the plate section 62a in the front-back direction above and below a position where the first component plate 62 faces the individual LEDs 72 in such a state that the first component plate 62 is superposed on the front surface 70a of the LED substrate 70. The plurality of LED openings 62a1 work in pairs as a set or pair of LED openings 62a1 and are disposed in such a manner as to face each other in the upper-lower direction (a second direction), while disposing one LED 72 therebetween.

In the plurality of LED openings 62a1, corner portions positioned at both ends of a lower side of the upper LED opening 62a1 which lie closer to the LED 72 and corner portions positioned at both ends of an upper side of the lower LED opening 62a1 which lie closer to the LED 72 are each opened substantially at an angle of 90 degrees. In contrast with this, corner portions positioned at both ends of an upper side of the upper LED opening 62a1 which lie farther from the LED 72 and corner portions at both ends of a lower side of the lower LED opening 62a1 which lie farther from the LED 72 are each opened round into a curve. As a result, strictly speaking, a rectilinear length of the lower side of the upper LED opening 62a1 is slightly longer than a rectilinear length of the upper side of the upper LED opening 62a1, and a rectilinear length of the upper side of the lower LED opening 62a1 is slightly longer than a rectilinear length of the lower side of the lower LED opening 62a1.

Each LED opening 62a1 is opened in a larger size than a light emitting surface of each LED 72. That is, an opening dimension D1 (refer to FIG. 6) of each LED opening 62a1 in the left-right direction is, for example, 6 mm and is larger than dimensions in the upper-lower direction and in the left-right direction of the light emitting surface of each LED 72. An interval D2 (refer to FIG. 6) between the LED openings 62a1 which lie adjacent to each other in the left-right direction is, for example, 6.4 mm. A screw hole 62b1 is provided in each protruding section 62b of the first component plate 62 for a screw with which the light guiding unit 60 is screw fastened to a front end portion 16a of the metallic sheet 16 in such a state that the LED substrate 70 and the insulating sheet 80 are held between the light guiding unit 60 and the metallic sheet 16.

In the first component plate 62, the support sections 62c are provided individually at portions corresponding to the intervals D2 where the LED opening 62a1 is not provided in the left-right direction. The first component plate 62 is a component which supports the second component plate 64 which protrudes to the front. The second component plate 64 has a characteristic of easily transmitting light to a component which is in contact with the second component plate 64, and hence, the first component plate 62 supports the second component plate 64 at the support sections 62c in such a manner that the second component plate 64 is brought into contact as little as possible with other components than the first component plate 62.

The second component plate 64 is a thick laterally elongated, substantially rectangular component plate and is disposed in such a posture that both plate surfaces are oriented in the upper-lower direction, that is, in such a state that the second component plate 64 stands at right angles with respect to the plate section 62a of the first component plate 62. In addition, dimensions in the upper-lower direction and the left-right direction of the second component plate 64 are made slightly smaller than dimensions in the upper-lower direction and the left-right direction of the emission opening 52a. The second component plate 64 is disposed in such a manner that both the plate surfaces thereof become substantially perpendicular to the substrate surfaces of the LED substrate 70 in such a state that the first component plate 62 is superposed on the front surface 70a of the LED substrate 70. The second component plate 64 includes a light guiding section 64a which is positioned at a front portion of the second component plate 64 not only to constitute the plate surfaces of the second component plate 64 and but also to guide lights from the LEDs 72 and a light receiving section 64b which is disposed in a position lying backwards of the light guiding section 64a in such a manner as to face the light emitting surfaces of the LEDs 72 to receive lights from the LEDs 72. Each LED opening 62a1 is opened in the front-back direction on upper and lower sides of the light receiving section 64b.

A front end face (a top surface) of the light guiding section 64a of the second component plate 64 constitutes an emitting surface 64a1 from which lights from the LEDs 72 are configured to be emitted. On the other hand, a back end face of the light receiving section 64b constitutes an incident surface 64b1 on which lights from the LEDs 72 are configured to be incident. In the second component plate 64, the incident surface 64b1 and the emitting surface 64a1 constitute opposite sides. The incident surface 64b1 is level with a back surface (a rear surface) of the plate section 62a of the first component plate 62. In this way, the first component plate 62 and the second component plate 64 are provided in such a manner that the incident surface 64b1 extends along the left-right direction between the pairs of upper and lower LED openings 62a1.

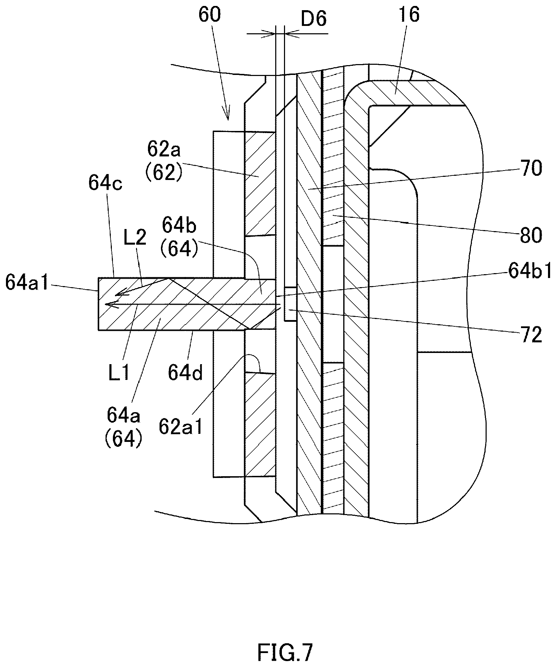

The emitting surface 64a1 is a rough surface rougher than the incident surface 64b1. Specifically speaking, a grain finish is applied to the emitting surface 64a1 so as to provide a fine uneven surface. In addition, an upper surface 64c and a lower surface 64d (refer to FIG. 7) of the second component plate 64 are smooth surfaces which are smoother than the incident surface 64b1. Specifically speaking, the upper surface 64c and the lower surface 64d are glossy surfaces with glossiness due to the application of a glossy finish. As a result, it is easier for light propagated within the light guiding section 64a to be emitted from the emitting surface 64a1 than from the upper surface 64c and the lower surface 64d. On the other hand, light propagated within the light guiding section 64a is reflected by the upper surface 64c and the lower surface 64d, and hence, it is more difficult for the light so propagated to be emitted to the outside of the light guiding section 64a from the upper surface 64c and the lower surface 64d than from the emitting surface 64a1. In addition, an axial direction (the front-back direction) of an imaginary line connecting the emitting surface 64a1 and the incident surface 64b1 of the second component plate 64 intersects the upper-lower direction (the second direction) at right angles.

A wall section (not shown) is provided on a back side of the emission opening 52a of the light shielding case 50 in such a manner as to extend backwards from an opening end of the emission opening 52a into an angular cylindrical shape. An internal side of this wall section has substantially the same shape as an external shape of the light guiding section 64a and is sized one size larger than the light guiding section 64a. The light guiding section 64a is accommodated in the inner side of the wall section in such a manner that the emitting surface 64a1 is exposed from the emission opening 52a, and most of external circumferential surfaces (the upper surface 64c, the lower surface 64d, a right side surface, a left side surface) of the second component plate 64 excluding the emitting surface 64a1 and the incident surface 64b1 are covered by the light shielding case 50 in such a state that the light guiding unit 60 is assembled to the light shielding case 50. As a result, in the case that lights from the LEDs 72 are incident on the incident surface 64b1 to be emitted from the emitting surface 64a1, only the display area 42a is seen as if being illuminated or shining when the electronic keyboard instrument 1 is seen from the front side.

Here, a form of disposition of the LEDs 72 and the light guiding unit 60 in the display unit 40 will be described. As shown in FIG. 6, in such a state that the light guiding unit 60 is attached to the metallic sheet 16 together with the LED substrate 70 and the insulating sheet 80, when viewed from the front side, the LEDs 72 are concealed behind the second component plate 64 of the light guiding unit 60. That is, a dimension of each LED 72 in the upper-lower direction is smaller a dimension D3 of the second component plate 64 in the upper-lower direction. The dimension D3 of the second component plate 64 in the upper-lower direction is, for example, 2.5 mm. An interval D4 which is an interval between each LED 72 and a left opening end of each LED opening 62a1 and each LED 72 and an interval D4 between a right opening end of each LED opening 62a1 are both, for example, 2.6 mm. An interval D5 between each LED 72 and an upper opening end of each LED opening 62a1 and an interval D5 between each LED 72 and a lower opening end of each LED opening 62a1 are both, for example, 2 mm.

In addition, the protruding sections 62b of the first component plate 62 are provided in the step-like fashion towards the back side by a distance larger than a thickness dimension of each LED 72. As a result, in such a state that the light guiding unit 60 is attached to the metallic sheet 16, the plate section 62a is spaced apart slightly from the LED substrate 70, whereby the light emitting surface of each LED 72 comes closer to the incident surface 64b1 of the second component plate 64 (refer to FIG. 7). An interval D6 between the light emitting surface of each LED 72 and the incident surface 64b1 is, for example, 0.5 mm.

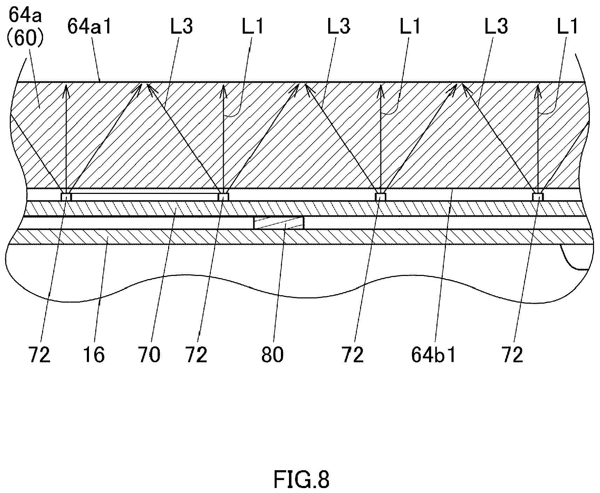

Next, optical paths of lights emitted from the individual LEDs 72 provided on the LED substrate 70 will be described. As shown in FIGS. 7 and 8, most of lights emitted from the individual LEDs 72 are incident on the incident surface 64b1 of the light guiding unit 60. A part of the lights which are incident on the incident surface 64b1 continues to travel substantially in a straight line towards the front and reaches the emitting surface 64a1 of the light guiding unit 60 (hereinafter, an optical path of light traveling in a straight line from the incident surface 64b1 to reach the emitting surface 64a1 will generally be referred to as a "first optical path L1".) (refer to arrows shown in FIGS. 7 and 8). The light that has reached the emitting surface 64a1 is then reflected diffusely on the emitting surface 64a1 as a result of the grain finish being applied to the emitting surface 64a1 and is emitted efficiently from the emitting surface 64a1. Then, the light emitted from the emitting surface 64a1 is allowed to exit from the emission opening 52a to the front side at a substantially uniform luminance brightness while being diffused by the diffusing sheet 46, and the player can see the emitting light at the display area 42a of the electronic keyboard instrument 1.

In addition, as shown in FIG. 7, another part of the light that has been incident on the incident surface 64b1 is diffused both upwards and downwards from the incident surface 64b1 within the light guiding section 64a and then reaches the upper surface 64c and the lower surface 64d of the second component plate 64. The light that has reached the upper surface 64c and the lower surface 64d is reflected totally internally by the upper surface 64c and the lower surface 64d as a result of a glossy finish being applied to the upper surface 64c and the lower surface 64d to reach the emitting surface 64a1 of the light guiding unit 60 (hereinafter, an optical path of light that is reflected totally on the upper surface 64c and the lower surface 64d to reach the emitting surface 64a1 will generally be referred to as a "second optical path L2".) (refer to an arrow shown in FIG. 7).

Here, the upper surface 64c and the lower surface 64d of the second component plate 64 on a circumference of each LED 72 are opened in the LED opening 62a1, and hence, the upper surface 64c and the lower surface 64d are surrounded by a layer of air whose refractive index is lower than a refractive index of the light guiding unit 60. The first component plate 62 and the second component plate 64 are formed integrally from the same material, and hence, there is provided no interface at a coupled portion of the first component plate 62 and the second component plate 64. As a result, the first component plate 62 and the second component plate 64 have a characteristic that light is easily propagated therebetween. Due to this characteristic, there is a risk that a part of light within the second component plate 64 is propagated to the first component plate 62 without being emitted from the emitting surface 64a1. However, the LED openings 62a1 are provided in the first component plate 62, and hence, when light that is incident on the incident surface 64b1 of the second component plate 64 reaches the upper surface 64c and the lower surface 64d of the second component plate 64, the light is made to be reflected easily on an interface with a layer of air.

In other words, with a structure in which the LED openings 62a1 of the present disclosure are not provided individually around the LEDs 72, light that is incident on the incident surface 64b1 into the second component plate 64 is propagated to the first component plate 62 in the upper-lower direction to thereby be diffused, and as a result, a luminance brightness per unit area in the upper-lower direction of a light guiding unit 60 of this structure will be reduced to be lower than that of the light guiding unit 60 of the present disclosure. In contrast with the structure described above, with the light guiding unit 60 of the present disclosure, bright light can be allowed to be emitted efficiently in the upper-lower direction and at an appropriate contrast ratio with the surroundings.

Additionally, as shown in FIG. 8, another part of the light that is incident on the incident surface 64b1 is diffused from the incident surface 64b1 to both sides in the left-right direction within the light guiding section 64a to reach the emitting surface 64a1 of the light guiding unit 60 (hereinafter, an optical path of light that is diffused to both the left and right sides to reach the emitting surface 64a1 will generally be referred to as a "third optical path L3".) (refer to arrows shown in FIG. 8). Here, intervals at which the LEDs 72 are disposed are such intervals that light that reaches the emitting surface 64a1 by way of the third optical path L3 reaches all areas of the emitting surface 64a1 excluding a portion positioned in front of each LED 72 (a portion which light reaches by way of the first optical path L1).

Light emitted from each LED 72 in the way described above reaches the emitting surface 64a1 by way of any of the first optical path L1, the second optical path L2 and the third optical path L3, and hence, in the emitting surface 64a1, not only portions positioned directly in front of the LEDs 72 are illuminated brightly into a dot by the light, but also portions of the emitting surface 64a1 which correspond to intervals defined between the adjacent LEDs 72 are illuminated by the light, whereafter the light is allowed to be emitted from the emitting surface 64a1. As a result, an area of the emitting surface 64a1 in the left-right direction which corresponds to a length of a number of LEDs 72 which are illuminated simultaneously is illuminated uniformly at a substantially equal luminance brightness. Thus, in the metronome function described above, it is not seen that the LEDs 72 emit light individually and separately but seen that a mass of light extending in the left-right direction is emitted while moving in the left-right direction, whereby the player can visually recognize the tempo well. In addition, for illumination at a desired luminance brightness, a load borne by each LED 72 can be less in a case in which some or all of the plurality of LEDs 72 are illuminated simultaneously than in a case in which only one LED 72 is illuminated.

As has been described heretofore, the display unit 40 according to the present embodiment includes the LED substrate 70 on which the plurality of LEDs 72 are provided in such a manner as to be aligned side by side in the left-right direction and the light guiding unit 60 which has the first component plate 62 including the plurality of LED openings 62a1 which are opened in the plate surfaces thereof which are substantially parallel to the LED substrate 70 in such a manner as to correspond individually to the plurality of LEDs 72 along the left-right direction and the second component plate 64 including the incident surface 64b1 positioned at the back end face of the second component plate 64 and the emitting surface 64a1 positioned at the front end face of the second component plate 64. The second component plate 64 is substantially perpendicular to the LED substrate 70 and is configured to guide light from at least one LED of the plurality of LEDs 72 which is incident on the incident surface 64b1, allowing the light to be emitted from the emitting surface 64a1. Then, the first component plate 62 and the second component plate 64 are connected together in such a manner that the incident surface 64b1 is positioned within the LED openings 62a1 along the left-right direction.

In the display unit 40 of the present embodiment configured in the way described above, most of light emitted from the individual LEDs 72 is incident on the incident surface 64b1 to enter the light guiding unit 60. The LED openings 62a1 are provided individually on the upper side and the lower side of the incident surface 64b1 in the upper-lower direction, and hence, among the lights which enter the light guiding unit 60, light that reaches an opening end of the LED opening 62a1 is reflected on an interface between the light guiding unit 60 and the opening end of the LED opening 62a1 to stay within the light guiding unit 60. As a result, an amount of light that is diffused in the upper-lower direction towards the LED openings 62a1 to escape therefrom can be suppressed to as low a level as possible, whereby light can be emitted from the incident surface 64b1 efficiently.

In addition, the first component plate 62 includes the support sections 62c which are formed integrally with the second component plate 64 at the portions where the LEDs 72 are not disposed in the upper-lower direction, and hence, the second component plate 64 can be prevented from falling from the first component plate 62. The support sections 62c are spaced farther apart from the light emitting surfaces of the LEDs 72 than the opening ends of the LED openings 62a1 positioned above and below the LEDs 72 which lie adjacent thereto, and hence, among lights entering into the second component plate 64 from the incident surface 64b1 of the light receiving section 64b, an amount of light that reaches the support sections 62c to be diffused in the upper-lower direction via the support sections 62c is small.

In addition, light that is diffused in the left-right direction within the second component plate 64 can also be emitted from the portions of the emitting surface 64a1 which correspond to the intervals defined between the adjacent LEDs 72 by adjusting the intervals between the LEDs 72, and hence, even with a relatively small number of LEDs 72, light can be output which is caused to expand in the left-right direction. In this way, with the present embodiment, lights emitted from the LEDs 72 can be caused to enter the second component plate 64 efficiently by giving a specific feature in shape to the light guiding unit 60, so that the light can be caused to reach a wide area of the emitting surface 64a1 in the left-right direction. As a result, the luminance brightness of the light guiding unit 60 can be enhanced while suppressing an increase in the number of LEDs 72 provided on the LED substrate 70 and suppressing the unevenness of luminance brightness.

In the display unit 40 according to the present embodiment, both the plate surfaces (the upper surface 64c and the lower surface 64d) of the second component plate 64 constitute the smooth surfaces which are smoother than the incident surface 64b1. Specifically speaking, the incident surface 64b1, which is the smooth surface, constitutes the surface to which the glossy finish is applied. According to this configuration, light diffused to both the sides in the upper-lower direction within the second component plate 64 to reach the upper surface 64c and the lower surface 64d is reflected easily totally due to the glossy finish applied to the upper surface 64c and the lower surface 64d to eventually reach the emitting surface 64a1. As a result, light diffused within the second component plate 64 can be caused to reach the emitting surface 64a1 effectively, thereby making it possible to increase the luminance brightness further.

In the display unit 40 according to the present embodiment, the emitting surface 64a1 of the second component plate 64 constitutes the rough surface that is rougher than the incident surface 64b1. Specifically speaking, the emitting surface 64a1, which is the rough surface, constitutes the surface to which the grain finish is applied. According to this configuration, light that is guided within the second component plate 64 to reach the emitting surface 64a1 is reflected diffusely on the emitting surface 64a1 due to the grain finish applied to the emitting surface 64a1 to thereby illuminate the emitting surface 64a1 uniformly. As a result, the unevenness of luminance brightness on the emitting surface 64a1 can be suppressed effectively.

In the display unit 40 according to the present embodiment, the plurality of LEDs 72 are provided on the LED substrate 70 at the equal intervals in the left-right direction as plurality of light sources, and the incident surface 64b1 of the second component plate 64 also extends in the left-right direction. This can realize the specific configuration in which most of lights emitted from the individual LEDs 72 can be made to be incident on the incident surface 64b1.

The electronic keyboard instrument 1 according to the present embodiment includes the display unit 40 for displaying information related to playing of the electronic keyboard instrument 1 effectively. According to this configuration, the display unit 40 of the present embodiment in which the unevenness of luminance brightness is suppressed to thereby improve the luminance brightness can be used as the apparatus for displaying, for example, the metronome function or the intensity of a key press value of the key 22 which is pressed by the player in the electronic keyboard instrument 1. As a result, light displayed on the emitting surface 64a1 can be shone to be seen as light of a small width in the upper-lower direction and can be shone to be seen as not light of a dot but light continuously extending in the left-right direction, thereby making it possible to realize the electronic keyboard instrument 1 including the display unit 40 which is superior in visibility and design.

The electronic keyboard instrument 1 according to the present embodiment includes the metallic sheet 16 for attaching the display unit 40 to the main body case 30 of the electronic keyboard instrument 1 and the insulating sheet 80 which is held between the LED substrate 70 and the metallic sheet 16. This can realize the specific configuration in which the display unit 40 can be attached strongly to the electronic keyboard instrument 1 with the metallic sheet 16, and a short-circuit between the metallic sheet 16 and the LED substrate 70 can be prevented.

Here, the embodiment of the present disclosure that has been described heretofore is presented as the example, and hence, there is no intention to limit the scope of the present disclosure by the embodiment. The novel embodiment can be carried out in other various forms, and various omissions, replacements, and modifications can be made thereto without departing from the spirit and scope of the present disclosure. Those resulting embodiments and modified examples thereof are included in the scope and gist of the present disclosure and are also included in the scope of disclosures claimed for patent under claims below and their equivalents. For example, in the embodiment that has been described heretofore, the LEDs are used as the light sources, however, the present disclosure is not limited thereto, and hence, other types of light sources such as an organic EL (electroluminescence) device may be used. In addition, in the embodiment that has been described heretofore, the first component plate and the second component plate are both described as being made up of the plates, however, the present disclosure is not limited thereto, and hence, at least either of the first component plate and the second component plate need only be made up of a plate.

In addition, in the embodiment that has been described heretofore, the first component plate and the second component plate are described as being formed integrally, however, the present disclosure is not limited thereto, and hence, in place of this configuration, a configuration may be adopted in which the first component plate and the second component plate are made to be separate components, and the first component plate and the second component plate are assembled together in such a manner as to be brought into contact with each other at the support sections. In this case, no cap is preferably produced in a position where the first component plate and the second component plate are brought into contact with each other. Additionally, in the embodiment that has been described heretofore, the LED openings are described as being opened into the substantially rectangular shape in the front-back direction, however, the present disclosure is not limited thereto, and hence, the LED openings may be opened into other polygonal shapes than the rectangular shape, or a substantially semicircular shape or a substantially semi-elliptical shape of which a side facing the LED constitutes a diameter thereof. Further, in the embodiment that has been described heretofore, the pair of LED openings is disposed in such a manner as to face one LED, however, the present disclosure is not limited thereto, and hence, only one of the pair of LED openings need only be disposed in such a manner as to face one LED.

## Claims

1. A display apparatus (40) comprising:
a plurality of light sources (72) which are aligned side by side in a first direction; and
a light guiding unit (60) configured to have an incident surface (64b1) on which light from at least one of the plurality of light sources (72) is incident and an emitting surface (64a1) from which light from the incident surface (64b1) is emitted and include openings (62a1) provided in positions along a second direction with respect to positions of the plurality of light sources (72) respectively, the second direction intersects the first direction.

2. The display apparatus (40) according to claim 1,
wherein the light guiding unit (60) comprises a first component plate (62) including the openings (62a1) provided therein and a second component plate (64) including the incident surface (64b1) provided at one end and the emitting surface (64a1) provided at another end thereof and coupled to the first component plate (62).

3. The display apparatus (40) according to claim 2,
wherein the first component plate (62) supports the second component plate (64) at interspaces defined between the openings (62a1).

4. The display apparatus (40) according to claim 2 or 3,
wherein both plate surfaces of the second component plate (64) constitute smooth surfaces (64d) which are smoother than the incident surface (64b1).

5. The display apparatus (40) according to any one of claims 2 to 4,
wherein the emitting surface (64a1) of the second component plate (64) constitutes a rough surface which is rougher than the incident surface (64b1).

6. The display apparatus (40) according to any one of claims 1 to 5,
wherein the openings (62a1) are provided in pairs for each of the plurality of light sources (72).

7. The display apparatus (40) according to claim 6,
wherein the second direction intersects a direction of a line which connects the incident surface (64b1) and the emitting surface (64a1), and
wherein the pairs of the openings (62a1) are disposed in such a manner that each of the plurality of light sources (72) is interposed one of the pairs of the openings (62a1).

8. The display apparatus (40) according to any one of claims 2 to 7,
wherein each part of the emitting surface (64a1) is provided in such a manner as to face to position between two adjacent ones of the plurality of light sources (72).

9. The display apparatus (40) according to any one of claims 1 to 8,
wherein an emission surface of the plurality of light sources (72) each has a substantially rectangular shape, and the openings (62a1) are each opened in a substantially rectangular shape that is larger than the emission surface of each of the plurality of light sources (72).

10. A display apparatus (40) comprising:
at least one light source (72);
a light guiding plate (64) configured to have an incident surface (64b1) on which light from the at least one light source (72) is incident and an emitting surface (64a1) from which light from the incident surface (64b1) is emitted; and
a support (62) formed from a same material as a material of the light guiding plate (64) and having a support section (62c) configured to support the light guiding plate (64),
wherein the support (62) includes an opening (62a1) provided in a position contiguous with the support section (62c) .

11. An electronic instrument (1) comprising:
the display apparatus (40) according to any one of claims 1 to 10; and
at least one operator (22).

12. The electronic instrument (1) according to claim 11,
wherein the display apparatus (40) is configured to display information related to playing of the electronic instrument (1).

13. The electronic instrument (1) according to claim 11 or 12, comprising:
a metallic sheet (16) configured to attach the display apparatus (40) to a casing of the electronic instrument (1); and
an insulating sheet (80) configured to be held between the display apparatus (40) and the metallic sheet (16).
